# EUROPEAN PATENT SPECIFICATION

(11) **EP 2 896 585 B1**
(45) Date of publication and mention of the grant of the patent: **27.07.2016**
(21) Application number: 14171109.3
(22) Date of filing: 04.06.2014
(51) Int. Cl.: B65G 57/06, B65G 57/03

(54) **Machine for stacking tiles with support devices operated from above**
Maschine zum Stapeln von Fliesen mit von oben betrieben Halteeinrichtung
Machine pour l'empilage de carrelage avec dispositif de support opérant par le haut

(30) Priority: 20.01.2014 IT MO20140009
(43) Date of publication of application: 22.07.2015
(73) Proprietor: Ferrari, Paola, 41049 Sassuolo MO (IT)
(72) Inventor: Ferrari, Paola, 41049 Sassuolo MO (IT)
(74) Representative: Gagliardelli, Fabrizio

(56) References cited:
- EP-A2- 0 396 491
- DE-A1- 3 100 764
- DE-A1- 3 823 263
- US-A- 3 491 902
- US-B1- 7 779 663

## Description

The present invention relates to a machine for stacking tiles included in the selection line in ceramics factories.

### - PRIOR ART AND DRAWBACKS

The current market trends in the ceramic tiles sector are oriented toward medium- / large-sized formats which typically have dimensions per side ranging from 40cm to one metre and beyond.

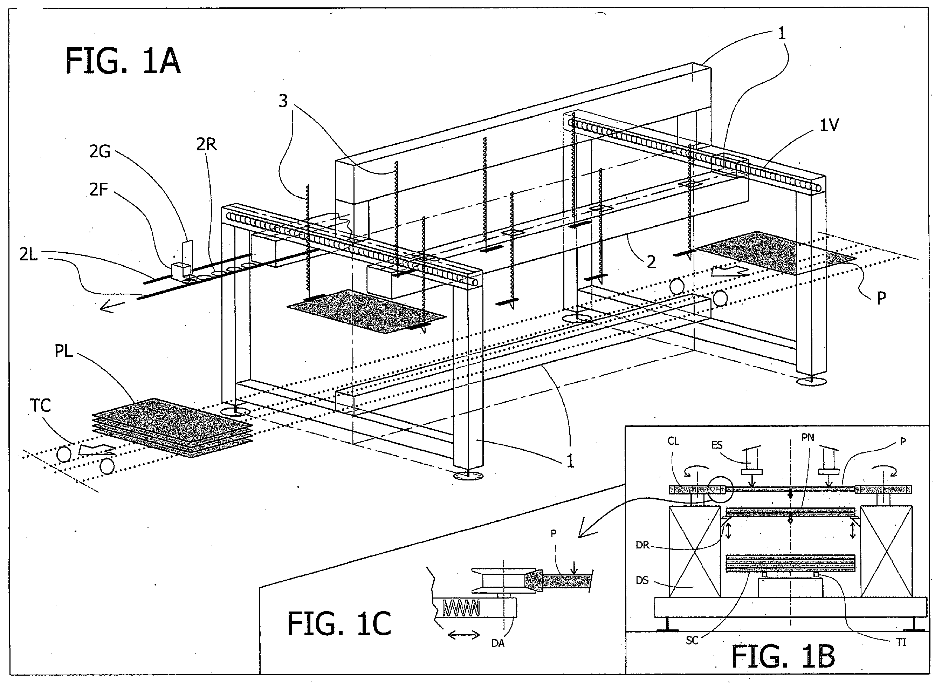

At present, stacking machines operating according to the prior art are generally included in the selection lines in the case of large formats; these are shown in a schematic and simplified manner in FIG.1 B; the qualifying features that characterize the prior art are mainly two:
- the various incoming pieces (P) are retained laterally by the belts (CL) and ejected by vertically acting strikers (ES) and unloaded onto mobile supports (DR); the pair of belts (CL) are supported by idle wheels mounted on movable elastic devices (DA) in a horizontal plane so as to be adapted to the tolerances of the various formats as shown in a schematic model in FIG.1C;
- during the stacking phase the tiles are supported by the mobile supports (DR) mounted on structures (DS) fixed to the lower part of the machine. This construction technique leads to the following drawbacks:
- possible damage (breaks, chipping, scratches, etc...) in the contact between the tiles being unloaded and the underlying ones since the ejectors (ES) must operate with considerable force to overcome the resistance of the belts on the lateral walls of the tiles, above all with large-size formats;
- possible jamming of pieces at the time of ejection, since the pressure of the belts varies greatly according to the size of the various pieces;
- high noise levels during operation caused by the impact between the pieces and the impact of the strikers;
- problematic access to the inside of the machine due to the position and overall dimensions of the stack collecting devices (DR).

DE3823263 according to the preamble of claim 1, A1 discloses a device for forming piles or stacks of flat objects according to the preamble of claim 1, comprising a stacking station which includes conveying means for transporting the objects and also stacking means comprising motorized rollers, the latter being positioned between longitudinal tubular members.

### - OBJECTS, ADVANTAGES, ENUNCIATION

The invention has the object of providing a stacking machine with internal apparatus having constructive solutions such as to remedy the above-mentioned drawbacks, and in particular with stacking devices inserted in tubular elements arranged in the upper part of the machine.

A further and not least important object of the invention is to have a simpler, more cost-effective machine with the internal devices arranged in such a way as not to pose limits to the formats to be stacked.

These and other objects are achieved by the present invention according to claim 1, mainly comprising a series of supports with rotating brackets (stacking devices) mounted on vertically sliding guides and inserted in two horizontal tubular elements set in the upper part of the machine and by a new system for elastically pushing the wheels of the belts to improve the tile ejection step.

### - LIST OF DRAWINGS

The stacking machine of the present invention and the advantages thereof will be better described and illustrated with the aid of the following figures, which show a typical and non-exclusive embodiment.
- FIG.1A: simplified schematized perspective view of a module of the machine of the present invention.
- FIG.1 B: simplified schematized front view of a machine built according to the prior art.
- FIG.1C: enlarged detail of FIG.1 B.
- FIG.2A and FIG.2B: side view and plan view from above of a complete stacking machine of the present invention according to a possible embodiment.
- FIG.3: simplified front view vista of the machine of the present invention.
- FIG.4A, FIG.4B, FIG.4C and FIG.4D: details of some devices of the machine of the present invention.
- FIG.5A to FIG.7B: sequence of movements of the main devices of the present invention.

### - DESCRIPTION OF THE COMPONENTS OF THE INVENTION

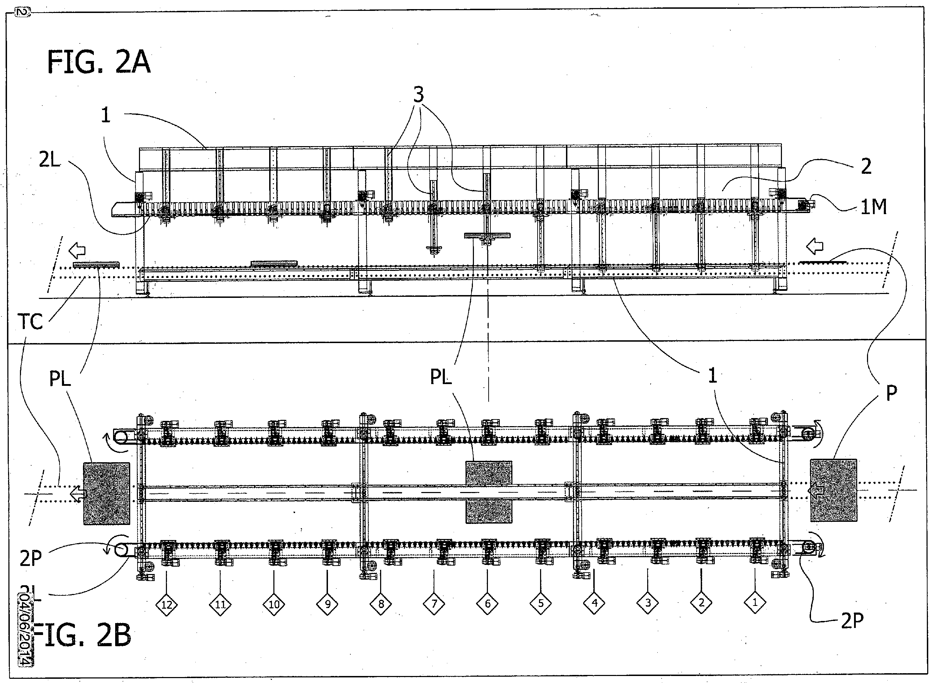

FIG.2A and FIG.2B show a complete stacking machine obtained by combining three modules internally comprising the same devices for a total of 12 stacking stations; this configuration can be considered a typical assembly for normal production needs.

For the sake of illustrative clarity, the main parts of the machine are also shown in FIG.1A comprising a perspective view of a single module corresponding to the central one in FIG.2A; the only substantial differences from the other two outer modules are the terminal parts of the belts (2L), where pulleys (2P) are present, two of them idle and two motor-driven by means of the motors (1 M); FIG.1A will also be useful for clarifying some operating details described below.

The machine mainly comprises a frame assembly (1) to which two tubular elements (2) are fixed, arranged symmetrically relative to the longitudinal axis, and inside which a pre-established number of stacking units (3) are inserted, the number thereof depending on the commercially foreseen classification; inserted in the lower part of the frame is a belt conveyor (TC) for removing the stacks and other machines for further processing.

### DESCRIPTION OF THE FRAME ASSEMBLY (1)

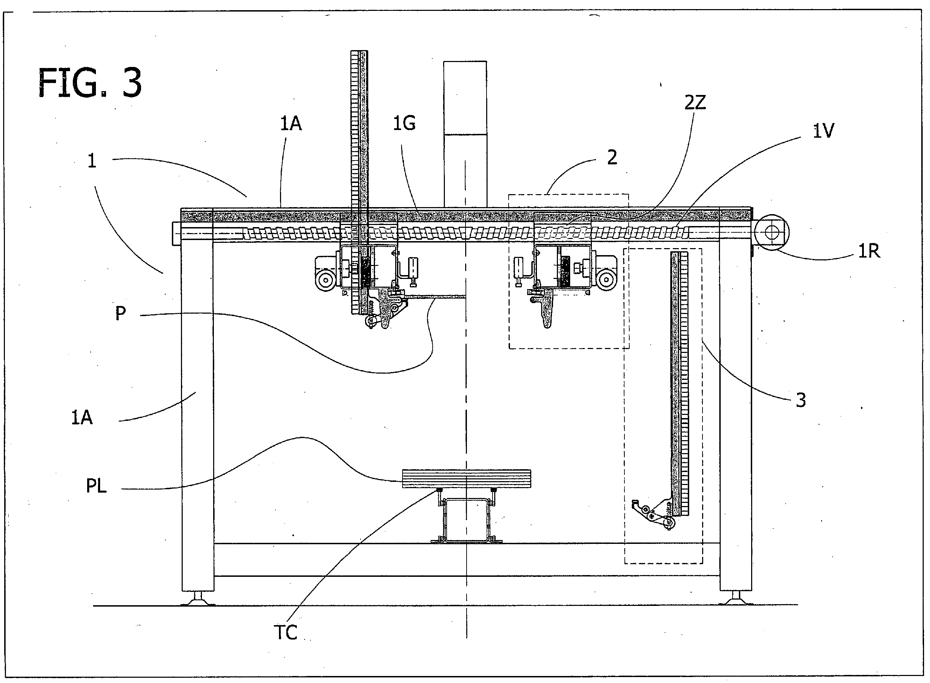

FIG.3 shows the stacking machine with the two main devices of the present invention, the profiled assemblies (2) and the stacking units (3): in the right part they are shown assembled as during normal operation, while in the left part they are separated to better highlight their constructive features.

With reference to FIG.3 and FIG.1A the frame assembly mainly comprises:
- a bearing structure (1A) to which the chain conveyor (TC) for removing the completed stacks is fixed in the lower part;
- a series of endless screws (1V) and guides (1G) coupled by means of supports (2Z) to the profiled assemblies (2) for the support and transverse adjustment thereof;
- a series of motors (1 R) for adjusting the distance between the two profiled assemblies (2).

### DESCRIPTION OF THE PROFILED ASSEMBLIES (2)

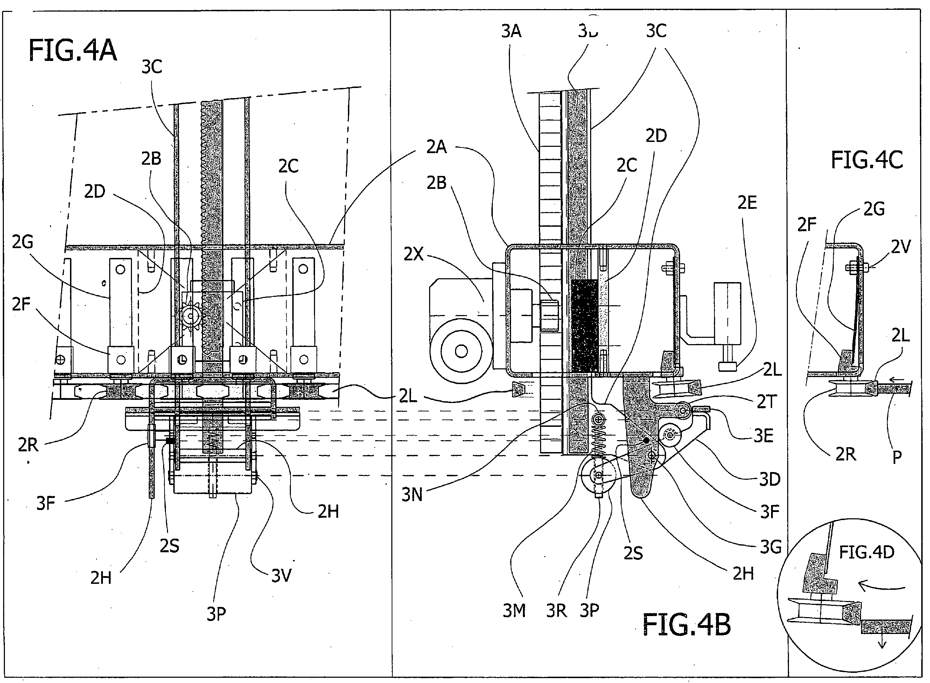

See mainly FIG.4A, FIG.4B and FIG.4C.

Each assembly is made up of:
- a rectangular shaped profiled metal bar (2A);
- a series of motors (2X) for moving (raising-lowering) the stacking units (3) by means of the gears (2B); said gears engage with the racks (3A) described in the subsequent unit;
- a series of guides (2C) fixed to the plates (2D), which are in turn fixed to the profiled bar (2A); the sliding blocks (3B) belonging to the unit (3) slide inside the guide (2C);
- a series of cam-shaped plates (2H) fixed to the lower part of the profiled bar (2A) to support the rotating lever (3D), each of which bears inside it an idle roller (2T); mechanical blocks (2S) are inserted in the inside part of the plates to delimit the rotation of the bracket (3D);
- a series of pistons (2E) fixed to the profiled bar (2A) and positioned aligned with the stacking units (3) they are coupled with;
- a belt (2L) held in position by a series of idle wheels (2R); the wheels are supported with the possibility of oscillating movements around the fastening elements (2V) via the blocks (2F) and elastic plates (2G).

### DESCRIPTION OF THE STACKING UNIT (3)

See mainly FIG.4A and FIG.4B.
Each unit is made up of:
- a bearing profiled bar (3C) to which a sliding block (3B) and a rack (3A) are fixed;
- a rotating bracket (3D) pivoted on the profiled bar (3C) in (3G); the bracket is coated with a layer of rubber (3E) on the upper end thereof;
- a cylindrically shaped counterweight (3P) pivoted on the lower end of the bracket (3D) with the possibility of rotating in (3V);
- a pin (3R) passing through the counterweight (3P) and pivoted with the possibility of rotating in (3N) ;
- a spring (3M) inserted in the pin (3R) with the ends thereof pressing toward the counterweight on one side and toward the pin-hinge (3N) on the other.

As already partially mentioned, there is a pair of stackers per stacking station, aligned and arranged symmetrically relative to the longitudinal axis of the machine.

### - DESCRIPTION OF OPERATION

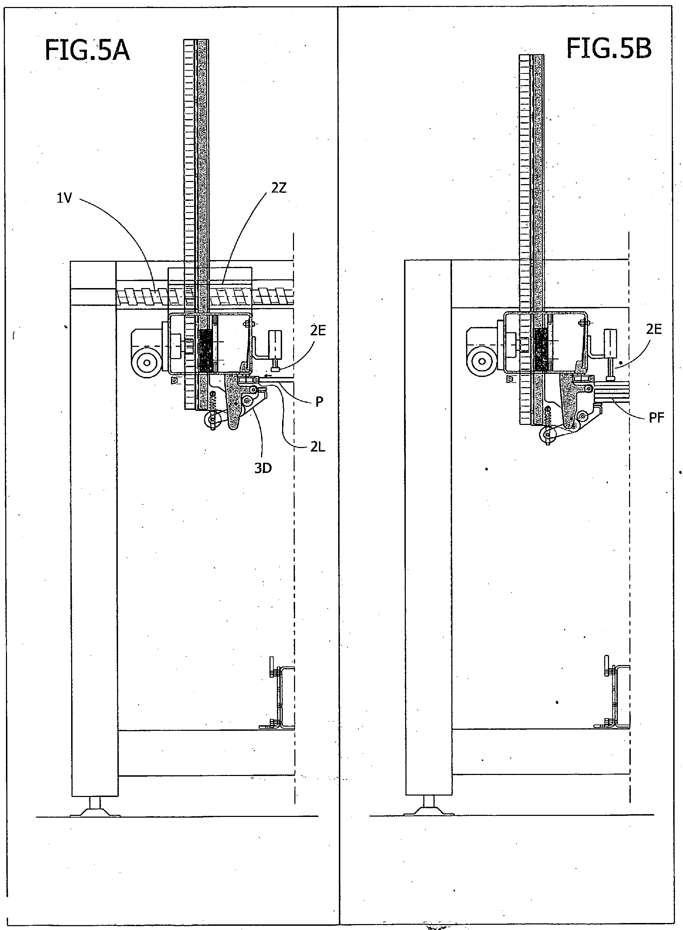

The operation of the stacker is shown by the sequence of figures 5, 6 and 7; as the machine is symmetrical, for the sake of illustrative clarity only the part with the devices on the left side is shown.

FIG.5A shows the machine at the start of the cycle: a tile (P) is passing, supported by the belts (2L); the stacker (3), still empty, has the supporting bracket (3D) in a low position, ready to receive tiles.

In FIG.5B the ejector (2E) is about to unload a tile (one may note the rod completely outside the piston) onto a nearly completed stack composed of three pieces; the stacking unit had previously been lowered by an amount equivalent to the thickness of the formed stack.

At the moment of ejection the parts (2G) and (2F), which push the wheels laterally on the belt, tend to open as shown in greater detail in FIG.4C and FIG.4D. In particular, FIG.4D shows the tendency of the wheels to rotate; this movement of rotation (allowed by the introduction of a leaf spring (2G) fixed in (2V)) at the moment the piece is being ejected tends to loosen the grip on the piece and facilitate the ejection thereof.

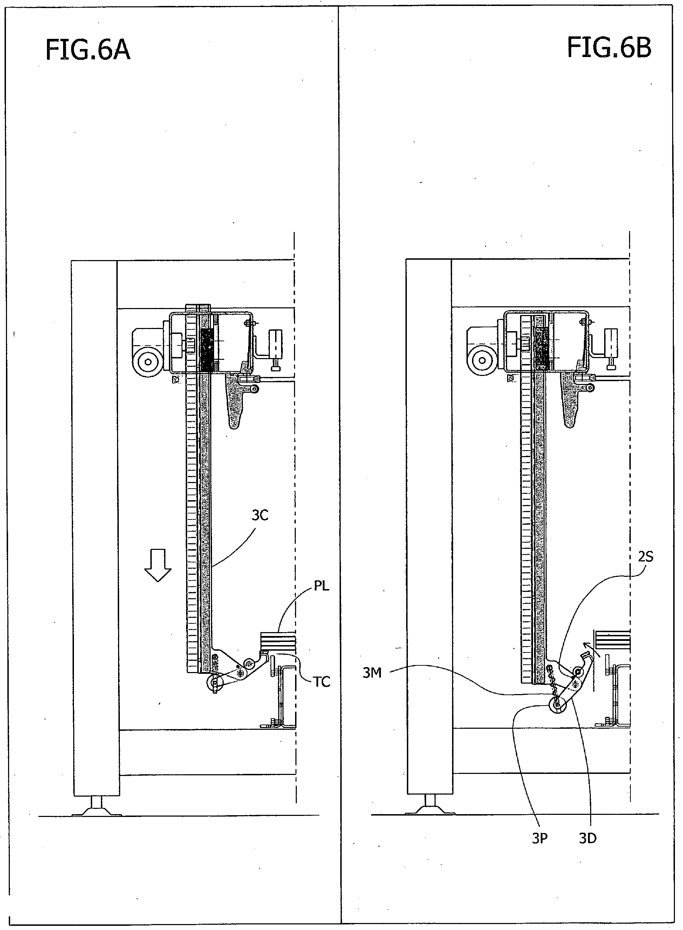

When the stack is completed, see FIG.6A, the stacking unit descends in order to deposit the stack (PL) on the conveyor (TC); subsequently, and without stopping its downward movement, the stacker descends further until enabling the lever (3D) to be raised by the action of the counterweight (3P) and of the spring (3M) as shown in FIG.6B.

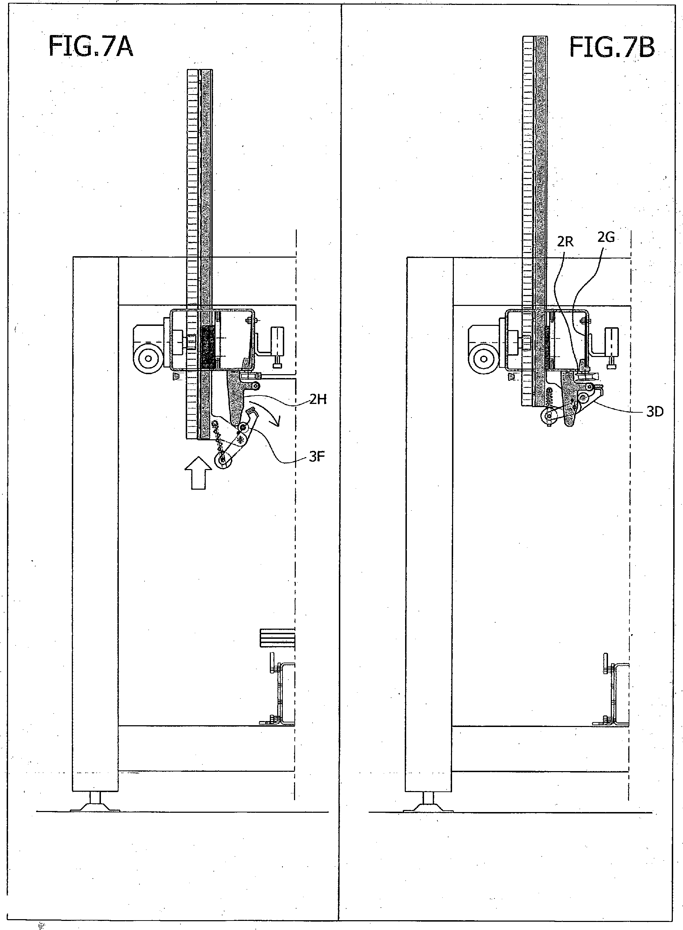

In this position the lever (3D) is not in interference with the stack (PL) just deposited, the stacking unit can thus rise again as shown in FIG.7A; this figure shows the moment at which the wheel (3F) enters into contact with the cam (2H) in such a way as to rotate the bracket (3D) in order to bring it back into the operating position, ready for a subsequent loading step. FIG.7B shows the stacker in a stand-by position, waiting for a new loading cycle without tiles in proximity, and with the springs (2G) of the presser of the wheels (2R) in a neutral position, adherent to the inner part of the profiled bar.

### - ENUNCIATION OF THE INVENTIVE CONCEPTS

The advantages of the machine of the present invention are now evident, and in particular:
- the possible damage caused by the contact between the tiles at the moment of ejection is minimized by the fact that in the ejection phase the belts (2L) tend to move away, thus decreasing their pressure on the lateral walls of the tiles; in practice, this means a lower force in the action of the pistons (2E) compared to the prior art and a lower speed of impact with the underlying stack; the same reasons apply as regards jamming and noise;
- the arrangement of the ejector units inserted in the profiled bars in the upper part leaves the lateral parts of the machine completely free, as also shown in the first module in FIG.2A.

The invention thus conceived is susceptible of numerous modifications or variants, all falling within the scope of the inventive concept; furthermore, all of the details can be replaced by other technically equivalent elements.

## Claims

1. A machine for staking ceramic tiles, mainly comprising a frame assembly (1), two tubular elements (2) arranged symmetrically relative to the longitudinal axis, a plurality of stacking units (3) mounted inside the tubular elements (2) and a conveyor (TC) for removing the completed stacks which is mounted in the lower part of the frame, **characterized in that** the conveyor (TC) is a chain conveyor (TC) and **in that** the frame assembly (1) mainly comprises:
- a bearing structure (1 A) to which the chain conveyor (TC) is fixed in the lower part;
- a series of endless screws (1 V), supports (2Z) and guides (1 G) connected to the profiled assemblies (2) for the support and transverse adjustment thereof;
- a series of motors (1 R) for adjusting the distance between the two profiled assemblies (2).

2. The machine according to claim 1, **characterized in that** each tubular assembly (2) mainly comprises:
- a rectangular shaped profiled metal bar (2A);
- a series of motors (2X) for moving (raising-lowering) the stacking units (3) by means of gears (2B);
- a series of guides (2C) fixed to the plates (2D), which are in turn fixed to the profiled bar (2A);
- a series of cam-shaped plates (2H) fixed to the lower part of the profiled bar (2A), each of which bears inside it an idle roller (2T) and a mechanical block (2S) for delimiting the rotation of the bracket (3D);
- a series of ejector pistons (2E) fixed to the profiled bar (2A) and positioned aligned with the stacking units (3) they are coupled with;
- a tile support belt (2L) held in position by a series of elastic dampening devices, each of which consists of an idle wheel (2R), a block (2F), and an elastic plate (2G) fixed to the profiled bar (2A) by means of a bolt (2V).

3. The machine according to claim 1, **characterized in that** each stacking unit (3) mainly comprises:
- a bearing profiled bar (3C), a sliding block (3B) and a rack (3A);
- a rotating bracket (3D) pivoted on the profiled bar (3C) in (3G); the bracket is coated with a layer of rubber (3E) on the upper end thereof;
- a cylindrically shaped counterweight (3P) pivoted on the lower end of the bracket (3D) with the possibility of rotating in (3V);
- a pin (3R) passing through the counterweight (3P) and pivoted with the possibility of rotating in (3N);
- a spring (3M) inserted in the pin (3R).

4. The machine according to claim (̵1)̵, **characterized in that** the stacking units (3) and tubular assemblies (2) are mounted in the upper part of the frame (1) so that when said stackers are completely raised they leave the sides of the machine free.

## Patentansprüche

1. Maschine zum Stapeln von Keramikfliesen, hauptsächlich umfassend eine Rahmenbaugruppe (1), zwei rohrförmige Elemente (2), die relativ zur Längsachse symmetrisch angeordnet sind, eine Vielzahl von Stapeleinheiten (3), die in den rohrförmigen Elementen (2) angebracht sind und einen Förderer (TC) zum Entfernen der vollständigen Stapel, der im unteren Teil des Rahmens angebracht ist, **dadurch gekennzeichnet, dass** der Förderer (TC) ein Kettenförderer (TC) ist und dass die Rahmenbaugruppe (1) hauptsächlich Folgendes umfasst:
- eine Tragestruktur (1A), an welcher der Kettenförderer (TC) im unteren Teil fixiert ist;
- eine Reihe von Endlosschrauben (1V), Halterungen (2Z) und Führungen (1G), die zum Halten und zur Quereinstellung von diesen mit den Profilbaugruppen (2) verbunden sind;
- eine Reihe von Motoren (1R) zur Einstellung des Abstands zwischen den zwei Profilbaugruppen (2).

2. Maschine nach Anspruch 1, **dadurch gekennzeichnet, dass** jede rohrförmige Baugruppe (2) hauptsächlich Folgendes umfasst:
- eine rechteckig gestaltete Profilstange aus Metall (2A);
- eine Reihe von Motoren (2X) zum Bewegen (Anheben-Absenken) der Stapeleinheiten (3) mithilfe von Zahnrädern (2B);
- eine Reihe von Führungen (2C), die an den Platten (2D) fixiert sind, die wiederum an der Profilstange (2A) fixiert sind;
- eine Reihe von nockenförmigen Platten (2H), die am unteren Teil der Profilstange (2A) fixiert sind, von denen jede innen eine Mitläuferwalze (2T) und einen mechanischen Block (2S) zur Begrenzung der Rotation des Tragarms (3D) trägt;
- eine Reihe von Auswerferkolben (2E), die an der Profilstange (2A) fixiert sind und mit den Stapeleinheiten (3), mit denen sie verkoppelt sind, ausgerichtet positioniert sind;
- ein Fliesenhalteband (2L), das durch eine Reihe von elastischen Dämpfeinrichtungen in Position gehalten wird, von denen jede aus einem Zwischenrad (2R), einem Block (2F) und einer elastischen Platte (2G) besteht, die an der Profilstange (2A) mithilfe einer Schraube (2V) fixiert ist.

3. Maschine nach Anspruch 1, **dadurch gekennzeichnet, dass** jede Stapeleinheit (3) hauptsächlich Folgendes umfasst:
- eine tragende Profilstange (3C), einen Gleitblock (3B) und eine Zahnstange (3A);
- einen rotierenden Tragarm (3D), der schwenkbar an (3G) an der Profilstange (3C) gelagert ist; der Tragarm ist an dessen oberen Ende mit einer Gummischicht (3E) bezogen;
- ein zylindrisch gestaltetes Gegengewicht (3P), das am unteren Ende des Tragarms (3D) mit der Möglichkeit schwenkbar gelagert ist, an (3V) zu rotieren;
- einen Stift (3R), der durch das Gegengewicht (3P) verläuft und mit der Möglichkeit schwenkbar gelagert ist, an (3N) zu rotieren;
- eine Feder (3M), die in den Stift (3R) eingeführt ist.

4. Maschine nach Anspruch 1, **dadurch gekennzeichnet, dass** die Stapeleinheiten (3) und rohrförmigen Baugruppen (2) im oberen Teil des Rahmens (1) so angebracht sind, dass sie die Seiten der Maschine freilassen, wenn die Stapler vollständig angehoben sind.

## Revendications

1. Machine pour l'empilage de carrelage céramique, comprenant principalement un assemblage de châssis (1), deux éléments tubulaires (2) disposés symétriquement par rapport à l'axe longitudinal, une pluralité d'unités d'empilement (3) montées à l'intérieur des éléments tubulaires (2) et un convoyeur (TC), destiné à retirer les piles achevées, étant monté dans la partie inférieure du châssis, **caractérisée en ce que** le convoyeur (TC) est un transporteur à chaîne (TC) et **en ce que** l'assemblage de châssis (1) comprend principalement :
- une structure portante (1V) à laquelle le transporteur à chaîne (TC) est fixé dans la partie inférieure ;
- une série de vis sans fin (1V), de supports (2Z) et de guides (1G) reliés aux ensembles profilés (2) pour le support et le réglage transversal de ces derniers ;
- une série de moteurs (1R) destinés à régler la distance entre les deux ensembles profilés (2).

2. Machine selon la revendication 1, **caractérisée en ce que** chaque ensemble tubulaire (2) comprend :
- une barre métallique profilée de forme rectangulaire (2A) ;
- une série de moteurs (2X) servant à déplacer (relever-abaisser) les unités d_{'}empilement (3) au moyens d'engrenages (2B) ;
- une série de guides (2C) fixés aux plaques (2D) qui sont à leur tour fixées à la barre profilée (2A) ;
- une série de plaques en forme de came (2H) fixées sur la partie inférieure de la barre profilée (2A), chacune d'elle portant en leur sein un rouleau libre (2T) et un bloc mécanique (2S) destiné à délimiter la rotation du support (3D) ;
- une série de pistons d'éjection (2E) fixés à la barre profilée (2A) et positionnés alignés avec les unités d'empilement (3) auxquelles ils sont accouplés ;
- une courroie de support de carreaux (2L) maintenue en position par une série de dispositifs de mouillage élastiques, chacun consistant en une roue libre (2R), un bloc (2F) et un plateau élastique (2G) fixé à la barre profilée (2A) par le biais d'un boulon (2V).

3. Machine selon la revendication 1, **caractérisée en ce que** chaque unité d'empilement (3) comprend principalement :
- une barre profilée portante (3C), un bloc coulissant (3B) et une crémaillère (3A) ;
- un support rotatif (3D) monté pivotant sur la barre profilée (3C) en (3G) ; le support est revêtu d'une couche de caoutchouc (3E) sur son extrémité supérieure ;
- un contrepoids cylindrique (3P) monté pivotant sur l'extrémité inférieure du support (3D) et pouvant tourner en (3V) ;
- une cheville (3R) passant à travers le contrepoids (3P) et montée pivotante et pouvant tourner en (3N) ;
- un ressort (3M) inséré dans la cheville (3R).

4. Machine selon la revendication (1), **caractérisée en ce que** les unités d_{'}empilement (3) et les ensembles tubulaires (2) sont montés dans la partie supérieure du châssis (1) de sorte que lorsque lesdits empileurs sont complètement surélevés, ils laissent les côtés de la machine libres.
